Europäisches Patentamt

European Patent Office

Office européen des brevets

(19)

(11) Veröffentlichungsnummer: **0 286 730**

**A1**

# EUROPÄISCHE PATENTANMELDUNG

(21) Anmeldenummer: 87118307.5

(22) Anmeldetag: **10.12.87**

(51) Int. Cl.⁴: **A01C 5/06**

Die Bezeichnung der Erfindung wurde geändert (Richtlinien für die Prüfung im EPA, A-III, 7.3).

(30) Priorität: **17.01.87 DE 3701217**

(43) Veröffentlichungstag der Anmeldung:
**19.10.88 Patentblatt 88/42**

(84) Benannte Vertragsstaaten:
**DE FR GB IT NL**

(71) Anmelder: **Rabewerk Heinrich Clausing**

**D-4515 Bad Essen 1(DE)**

(72) Erfinder: **Gehrke, Rudolf, Dipl.-Ing.**
**Lerchenweg 4**
**D-2990 Papenburg 1(DE)**

(74) Vertreter: **Missling, Arne, Dipl.-Ing.**
**Patentanwalt Bismarckstrasse 43**
**D-6300 Giessen(DE)**

(54) **Bausatz für eine Sämaschine mit austauschbaren Säscharkörpern.**

(57) Um eine Sämaschine für verschiedene Säverfahren, insbesondere zum Normalsäen in Reihen und Bandsäen, in breiteren Streifen verwenden zu können, müssen Säschare bequem ausgewechselt werden können. Der neue Bausatz soll es ermöglichen, Säschare unter Vermeidung von Montageproblemen rasch wechseln zu können.

Jeder Säscharkörper (9) ist als komplette Einheit mit einer leicht lösbaren Verbindung (23, 24, 26) mit einem schwenkbaren Arm (7) verbunden. Durch die Verbindung wird der Säscharkörper (9) auch auf das ihm zugeordnete Saatgut-Zuführungsrohr (10) ausgerichtet. Die vorgesehene Verbindungsstelle liegt außerhalb des Verschmutzungsbereiches, so daß keine Montageprobleme entstehen.

Der Bausatz ist überall bei der Landbestellung verwendbar, wo Saatgut mit verschiedenen Säscharkörpern eingebracht werden soll.

Fig. 2

EP 0 286 730 A1

## Bausatz mit einer Sämaschine und austauschbaren Säscharkörpern

Die Erfindung bezieht sich auf einen Bausatz für eine Sämaschine und austauschbaren Säscharkörpern für Reihensaat (Normalsaat) und Bandsaat, vorzugsweise auch Säscharkörpern mit Rollscharen, die an in einer vertikalen Ebene - schwenkbaren Armen gehalten sind.

In neuerer Zeit wird neben der linienförmigen Aussaat auch die sogenannte Bandsaat angewendet, bei der das Saatgut in Streifen von z. B. 8 cm Breite von einem Bandsaatschar in den Boden eingebracht wird. Benachbarte Streifen können ohne Zwischenraum aneinander anschließen oder auch gewisse Abstände haben, so daß die Saat fast einer sogenannten Breitsaat entspricht, bei der das Saatgut breitwürfig, möglichst gleichmäßig, verteilt auf der Fläche verstreut wird. Die Bandsaat hat den Vorteil, daß die gesamte Ackerfläche gleichmäßiger mit Saatkörnern besetzt wird. Wenn eine Sämaschine für beide Säarten verwendet werden soll, ist es erforderlich, die Säschare auszutauschen.

Ein bekannter Bandsaatscharkörper (DE-PS 32 17 350) ist so ausgebildet, daß er im Bedarfsfall an einem Normalsäschar befestigt werden kann, wodurch Normalsäschare in Bandsaatschare umgewandelt werden können. Die Montage von Zusatzteilen an vorhandenen Normalsäscharen ist problematisch wegen der unvermeidlichen Verschmutzung, die Säschare beim Gebrauch erleiden. Auch sind hinsichtlich der Wir kungsweise Kompromisse in Kauf zu nehmen, da eine optimale Ausbildung des Säscharkörpers insgesamt für den jeweiligen Anwendungszweck nicht möglich ist, wenn für beide Säarten ein gleicher Grundkörper verwendet wird.

Der Erfindung liegt die Aufgabe zugrunde, einen Bausatz der eingangs genannten Art vorzuschlagen, mit dem die Umstellung aur verschiedene Gebrauchsarten der Sämaschine mit geringem Arbeitsaufwand durchgeführt werden kann, wobei die Sämaschine für jede Arbeitsart optimal ausgebildet sein soll.

Diese Aufgabe wird nach der Erfindung dadurch gelöst, daß die Säscharkörper mit einer leicht lösbaren Verbindung, vorzugsweise mittels einer ohne Werkzeuge herstellbaren und lösbaren Steckverbindung, an den schwenkbaren Armen gehalten sind und daß mit der Verbindung die Säscharkörper auch gegenüber einem Saatgut-Zuführungsrohr ausgerichtet sind.

Bei einem so ausgebildeten Bausatz werden nicht nur Teile der Säscharkörper ausgewechselt, sondern die Säscharkörper insgesamt. Die Säscharkörper können deshalb auch insgesamt optimal für ihre Anwendung ausgebildet werden. Das Auswechseln ist unproblematisch, da an den Stellen, an denen die Säscharkörper zu befestigen sind, eine Verschmutzung in der Regel nicht eintritt. Durch die selbsttätige Ausrichtung auch auf Saatgut-Zuführungsrohre, sind keine zusätzlichen Ausrichtarbeiten erforderlich, um die Saatgut-Zuführungsrohre in Übereinstimmung mit den Säscharkörpern zu bringen.

Die Erfindung kann auf verschiedenen konstruktiven Wegen realisiert werden. Gemäß Patentanspruch 2 ist an jedem schwenkbaren Arm ein Anschlußflansch oder dergleichen für ein Saatgut-Zuführungsrohr befestigt und die Säscharkörper haben eine an den Flansch ansetzbare obere Öffnung. Bei dieser Ausführungsform sind also, was konstruktiv oft wünschenswert ist, Schwenkarme und Saatgut-Zuführungsrohre verschiedene Teile. Die gegenseitige Ausrichtung ergibt sich dadurch, daß am Arm auch ein Flansch für den Anschluß des Saatgut-Zuführungsrohres verbleibt, das demgemäß ständig angeschlossen bleiben kann.

Die Säscharkörper können gemäß Anspruch 3 mittels Ansetzen am schwenkbaren Arm befestigt sein, wobei vorzugsweise eine muldenförmige Ausbildung des Ansatzes gemäß Anspruch 4 vorgesehen ist. Die Muldenform erleichtert das Ansetzen von unten her. Die Sicherung kann auf einfache Weise mittels eines Steckstiftes erfolgen (Anspruch 5).

Man kann die Säscharkörper zusätzlich im Bereich des Anschlußflansches fixieren (Anspruch 6). Wenn zur diesbezüglichen Fixierung eine Blattfeder gemäß Anspruch 7 verwendet wird, kann man den Säscharkörper mit einem Rohransatz auf den zugeordneten schwenkbaren Arm aufschieben, da die Blattfeder nach oben ausweichen kann. Der Arm kann dann zusätzlich am schwenkbaren Arm mittels einer Art Haken gesichert sein (Anspruch 8).

Gemäß einer weiteren Alternative (Anspruch 9) kann die zusätzliche Sicherung auch am Flansch mittels eines Arretierungsstiftes erfolgen. Gegenüberliegend (am Ansatz des Scharkörpers) kann ein Stift als Sicherung gegen Abrutschen vom - schwenkbaren Arm nach unten vorgesehen sein (Anspruch 10).

Gemäß einer weiteren Variante (Anspruch 11) können Säscharkörper und schwenkbarer Arm auch mit einem Spannverschluß befestigt werden. Dieser kann einen diametral dem Ansatz gegenüberliegenden Spannhebel aufweisen (Anspruch 12), der in einer vertikalen Ebene bewegbar ist.

Bei einer weiteren Ausführungsform der Erfindung (Anspruch 13) ist ein Adapterstück vorgesehen, das am schwenkbaren Arm befestigt ist und auf den sich die Säscharkörper aufstecken lassen. Zur Sicherung können Arretierungslappen und ein Verriegelungsbolzen gemäß Anspruch 14 vorgesehen werden.

Gemäß der Variante nach Anspruch 15 hat der Säscharkörper selber eine Einstecköffnung für das Saatgut-Zuführungsrohr und einen Befestigungsansatz zur Befestigung an dem zugeordneten - schwenkbaren Arm. In diesem Fall wird das Saatgut-Zuführungsrohr, das entsprechend flexibel ausgebildet sein muß, mit einem Griff in die Adapteröffnung eingesteckt, z.B. in eine Bohrung desselben. Auch die Verbindung zwischen - schwenkbarem Arm und Adapteröffnung kann durch Einstecken des Arm-es in eine Bohrung der Adapteröffnung erfolgen (Anspruch 16).

Bei der im Anspruch 17 angegebenen Ausführungsform ist jeder schwenkbare Arm zugleich als Saatgut-Zuführungsrohr ausgebildet. In diesem Fall wird der Säscharkörper durch Aufstecken auf den - schwenkbaren Arm befestigt und vorzugsweise durch einen Querstift gesichert (Anspruch 18), wobei die Arretierungslappen gemäß Anspruch 19 angeordnet sein können.

In der Zeichnung sind Ausführungsbeispiele der Erfindung dargestellt. Es zeigen:

Fig. 1 in stark vereinfachter Darstellung eine Seitenansicht einer Sämaschine,

Fig. 2 einen schwenkbaren Arm mit daran befestigtem Normal-Säscharkörper (Drillschar),

Fig. 3 einen Schnitt nach Linie III-III in Fig. 2,

Fig. 4 eine Draufsicht auf den Normal-Säscharkörper entsprechend den Pfeilen IV-IV in Fig. 2,

Fig. 5 eine Darstellung des mit dem Normal-Säscharkörper gesäten Streifens,

Fig 6 im Stadium vor der Montage einen - schwenkbaren Arm und einen daran zu befestigenden Bandsaat-Säscharkörper,

Fig. 7 eine Draufsicht auf den schwenkbaren Arm entsprechend den Pfeilen VII-VII in Fig.6,

Fig. 8 eine Draufsicht auf den Bandsaat-Säscharkörper entsprechend dem Pfeil VIII in Fig. 6,

Fig. 9 eine vom Bandsaat-Säscharkörper nach Fig. 6 hergestellte Säspur,

Fig.10 einen Säscharkörper mit Rollschar (Einscheibenschar) in Seitenansicht,

Fig.11 einen Horizontalschnitt entsprechend den Pfeilen XI-XI in Fig. 10 samt Darstellung einer von dem Säscharkörper nach Fig. 10 hergestellten Säspur,

Fig. 12 im Zustand vor der Montage ein Adapterstück und einen Säscharkörper, der von unten auf das Adapterstück aufgesteckt ist,

Fig. 13 den montierten Zustand der Ausführungsform nach Fig. 12,

Fig. 14 im Zustand vor der Montage eines Säscharkörpers einen schwenkbaren Arm, ein Saatgut-Zuführungsrohr und ein Säschar,

Fig. 15 im Zustand vor der Montage einen Teil eines schwenkbaren Armes, der zugleich als Saatgut-Zuführungsrohr ausgebildet ist und einen darauf aufsteckbaren Säscharkörper,

Fig. 16 den montierten Zustand des Säscharkörpers nach Fig. 15,

Fig. 17 eine Draufsicht auf das Säschar entsprechend dem Pfeil XVII in Fig. 15,

Fig. 18 eine Seitenansicht des unteren Endes eines schwenkbaren Armes des unteren Endes eines Saatgut-Zuführungsrohres und eines Säscharkörpers gemäß einer weiteren Ausführungsform der Erfindung,

Fig. 19 eine Ansicht des Säscharkörpers entsprechend dem Pfeil XIX in Fig. 18,

Fig. 20 eine Seitenansicht entsprechend Fig. 18 bei einer weiteren Variante der Erfindung,

Fig. 21 eine Ansicht des Säscharkörpers nach Fig.20 in Richtung des Pfeiles XXI in Fig. 20,

Fig. 22 eine Draufsicht auf das untere Ende eines schwenkbaren Armes mit daran befindlichem Säscharkörpers gemäß einer weiteren Ausführungsform der Erfindung und

Fig. 23 einen Teilschnitt nach Linie XXIII-XXIII in Fig. 22.

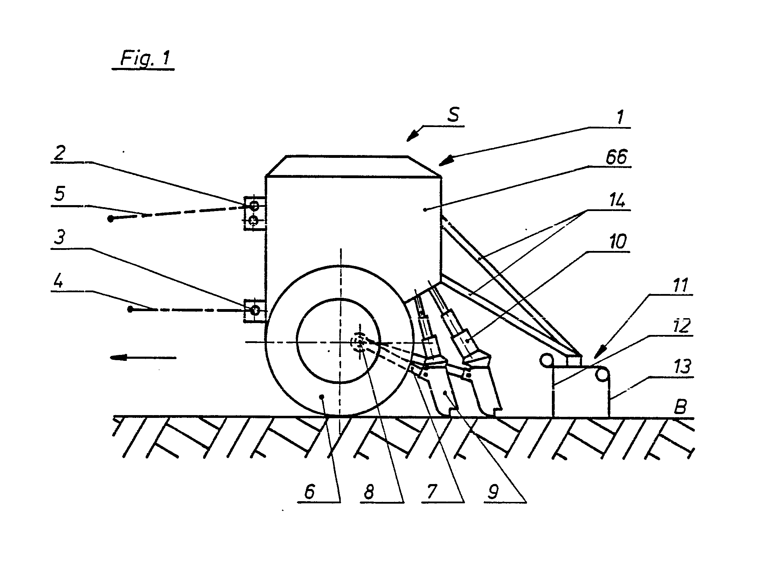

In Fig. 1 ist eine Sämaschine S in Seitenansicht stark vereinfacht dargestellt. Die Sämaschine hat ein Gestell 1, an dem sich Befestigungsstellen 2, 3 für die Ankupplung von Unterlenkern 4 und eines Oberlenkers 5 eines Dreipunkt-Gestänges befinden. Das Gestell 1 ist über zwei Laufräder 6 auf dem Boden B abgestützt. Am Gestell 1 befindet sich auch ein Saatgutkasten 66, von dem Saatgut-Zuführungsrohre 10 ausgehen, allerdings unter Zwischenschaltung einer Dosiereinrichtung für die genau dosierte Abgabe des Saatgutes.

Am Gestell der Maschine sind nebeneinander viele schwenkbare Arme 7 angeordnet. Die Arme sind um Gelenke 8 schwenkbar, die sich am Gestell 1 befinden. Je nach Arbeitsbreite der Sämaschine können bis zu 13 Arme 7 je Meter Maschinenbreite nebeneinander angeordnet sein. Jeder Arm 7 trägt einen Säscharkörper 9, in den ein Saatgut-Zuführungsrohr 10 einmündet. Im dargestellten Fall ist das Saatgut-Zuführungsrohr teleskopartig ausgebildet.

Hinter den Säscharkörpern 9 ist ein Striegel 11 angeordnet, der zwei Reihen aus Zinken 12, 13 aufweist, die die Saat bedecken. Die Zinkenreihen verlaufen parallel zu der Reihe aus Säscharkörpern 9. Der Striegel 11 ist über Streben 14 am Gestell 1 abgestützt.

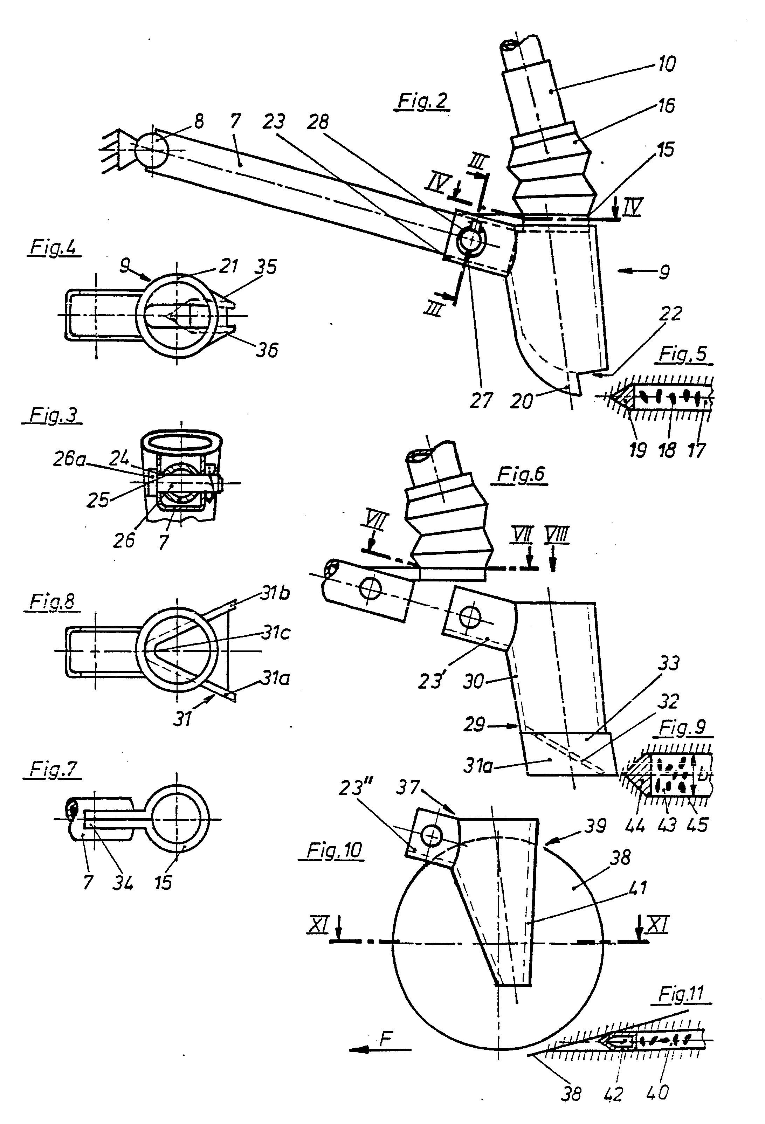

In Fig. 2 ist die Anordnung aus schwenkbarem Arm 7, Säscharkörper 9 und Saatgut-Zuführungsrohr 10 gegenüber Fig. 1 vergrößert und mit zusätzlichen Details dargestellt. Am hinteren Ende des um das Gelenk 8 schwenkbaren Armes 7 ist ein Flansch 15 befestigt, z.B. durch Schweißung. An den Flansch 15 ist ein kurzer Faltenbalgen 16 angeschlossen, dessen oberes Ende mit dem Teleskoprohr 10 (Saatgutzuführungsrohr) verbunden ist.

Der Säscharkörper 9 ist ein Normal-Säscharkörper, der das Saatgut linienförmig ablegt. Die Ablegelinie 17 ist in Fig.5 dargestellt. Die Saatkörner 18 liegen mehr oder weniger in einer geraden Linie hintereinander. Am vorderen Ende der Ablegelinie ist der Querschnitt 19 der vorderen Schneide 20 des Säscharkörpers 9 dargestellt. Der Säscharkörper 9 hat einen rohrförmigen Grundkörper 21, der sich nach unten hin etwas verjüngt und, wie in Fig. 4 zu erkennen ist, eine längliche, - schmale Auslauföffnung hat. Aus der Öffnung 22 können die Körner 18 herausfallen und in die - schmale Furche gelangen, die von der Schneide 20 gezogen wurde.

An den Grundkörper 21 ist ein muldenförmiger Ansatz 23 angeformt, der nach oben offen ist wie Fig. 3 zeigt. Dieser Ansatz dient zur Befestigung des Säscharkörpers 9 am schwenkbaren Arm 7. Zum Zwecke der Befestigung wird der Säscharkörper von unten her quer an den Arm 7 angesetzt, bis Löcher 24 in den Muldenwänden mit einer Querbohrung 25 im schwenkbaren Arm 7 zur Deckung gekommen sind. Gleichzeitig wurde da durch der Grundkörper 21 mit seinem oberen Rand über den Flansch 25 gestülpt und dadurch sozusagen das Saatgut-Zuführungsrohr 10 mit dem Säscharkörper 9 gekuppelt.

Die genannte Stellung wird nun dadurch fixiert, daß ein Verriegelungsbolzen 26 durch die Löcher 24 und 25 hindurchgesteckt wird, bis sein Kopf 26a an der Außenwand des muldenförmigen Ansatzes 23 zur Anlage gekommen ist. Zur axialen Fixierung wird ein Sicherungsstift 27 verwendet, der durch ein Querloch im Bolzen 26 hindurchgeschoben wird. Das Herausfallen des Sicherungsstiftes wird durch eine Arretierungsfeder 28 verhindert.

Ein Normal-Säscharkörper 9 kann rasch gegen einen Bandsaat-Säscharkörper 29 ausgetauscht werden. Zunächst soll der Breitsaat-Säscharkörper anhand der Fig. 6 bis 9 beschrieben werden.

Der Bandsaat-Säscharkörper 29 hat ebenfalls einen rohrförmigen, sich nach unten verjüngenden Grundkörper 30. Am unteren Ende des Grundkörpers befindet sich ein schneepflugartiges Schar 31 (siehe auch Fig. 8) mit winklig zueinander stehenden Teilen 31a und 31b, die an einem Scheitel 31c zusammentreffen. Zwischen den Scharteilen 31a, 31b erstreckt sich ein Prallblech 32, auf dem Saatgut abprallen kann, wonach das Saatgut den Säscharkörper über eine Öffnung 33 verläßt. In Fig. 9 ist die breite bandförmige Rille 43 dargestellt, die von dem Bandsaat-Säscharkörper 29 hergestellt wird.

Der Bandsaat-Säscharkörper 29 hat einen gleichen muldenförmigen Ansatz 23' wie der Normal-Säscharkörper 9.

Aus Fig. 7 ist auch die Beschaffenheit des Flansches 15 zu erkennen. Dieser ist aus einem Band gebogen. Die parallelen Bandenden 34 sind mit dem Arm 7 verschweißt.

Zum Auswechseln eines Normal-Säscharkörpers gegen einen Breitsaat-Säscharkörper ist nur folgendes zu tun. Nach Herausziehen des Sicherungsstiftes 27 wird der Verriegelungsbolzen 26 herausgezogen, wonach sich der Normal-Säscharkörper nach unten wegnehmen läßt. Danach lassen sich Breitsaat-Säscharkörper rasch in gleicher Weise befestigen, wie dies schon am Beispiel der Befestigung der Normal-Säscharkörper beschrieben wurde. Die Befestigungsstellen mit den Verriegelungsbolzen 26 liegen in einem Bereich, der bei der Arbeit der Maschine nicht verschmutzt wird, da ja die Säscharkörper nur mit ihren unteren Bereichen in den Erdboden eingreifen. Probleme bei der Entfernung einer Säscharkörperart und der Montage einer anderen Säscharkörperart entstehen deshalb nicht.

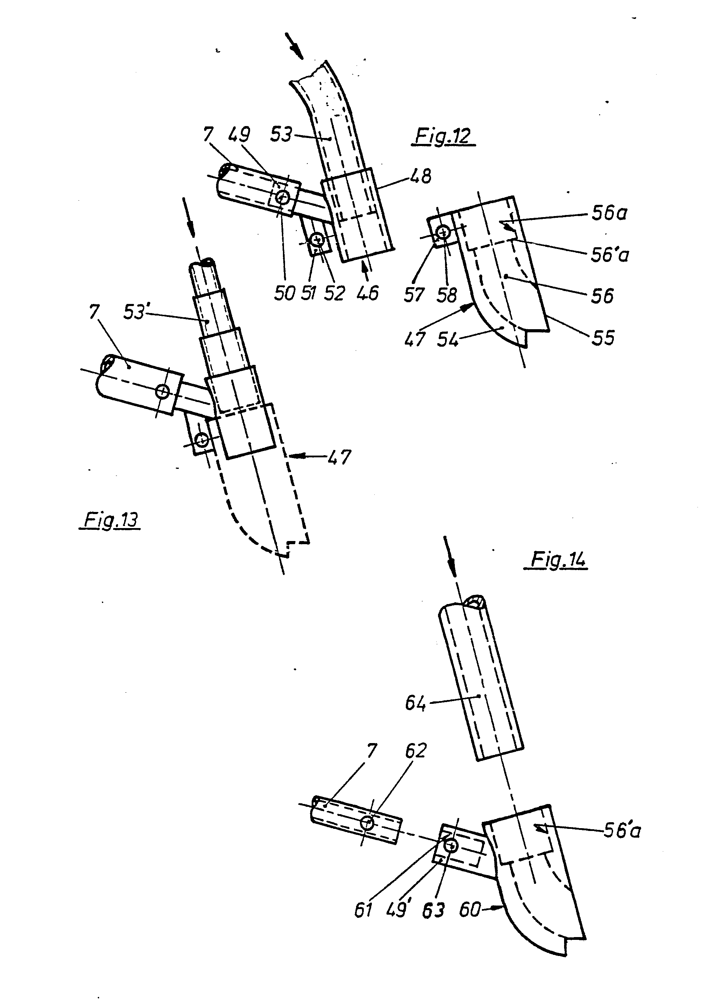

Fig. 10 zeigt ein sogenanntes Einscheibenschar mit einem Säscharkörper 37 und einem Rollschar 38. Das Rollschar 38 ist eine Scheibe, die drehbar am Grundkörper 39 des Säscharkörpers 37 gelagert ist (nicht im einzelnen dargestellt). Wie Fig. 11 zeigt, ist die Scheibe 38 schräg zur Fahrtrichtung F gestellt und erzeugt dadurch wieder eine Bodenrille 40 für das Ablegen der Saat. Der Säscharkörper 39 hat einen Grundkörper 41, der sich nach unten verjüngt und einen ovalen Querschnitt 42 aufweist. Der in Fig. 11 dargestellte Querschnitt ist der Querschnitt an der Ausflußöffnung des Säscharkörpers.

Auch der Säscharkörper 37 hat einen muldenförmigen Ansatz 23", der gleich ausgebildet ist, wie die Ansätze 23 und 23'. Der Säscharkörper 37 läßt sich deshalb in gleicher Weise befestigen wie die Säscharkörper 9 und 29. Der Bau satz kann von jedem der Säscharkörper 9, 29, 37 eine solche Anzahl aufweisen, daß jeder schwenkbare Arm 7 mit jedem der drei verschiedenen Säscharkörper bestückt werden kann. Die Sämaschine kann also leicht für verschiedene Feldbedingungen und Saatgutarten umgerüstet werden.

Das Dreieck 44 zeigt den Grundriß des Schares 31. Die Breite B der Rille 43 ist etwa gleich der größten Breite des Schares 31. Die Saatkörner 45 werden in der breiten Rille 43 (die Breite kann z.B. 8 cm betragen) über die ganze Fläche etwa gleichmäßig verteilt abgelegt. An eine Rille 43 kann unmittelbar, d.h. ohne Zwischenraum, die nächste Rille anschließen. Man kann jedoch auch zwischen benachbarten Rillen Abstände vorsehen.

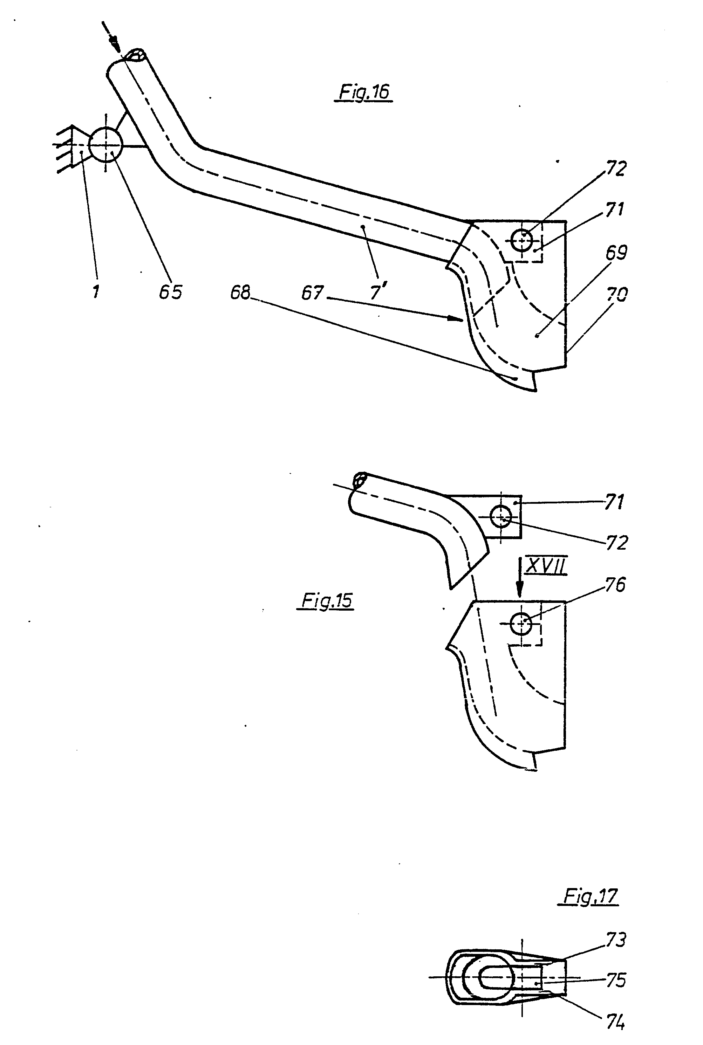

Bei der in den Fig. 12 und 13 dargestellten Variante ist ein Adapterstück 46 vorgesehen, auf das ein Säscharkörper 47 aufsteckbar ist. Das Adapterstück 46 hat einen rohrförmigen Grundkörper 48, von dem ein Ansatz 49 abragt. Der Ansatz 49 ist in einem schwenkbaren Arm 7 einsteckbar und kann axial mittels eines Arretierungsbolzens 50 gegen Abziehen gesichert sein. Der Arretierungsbolzen 50 durchgreift miteinander fluchtende Löcher in dem rohrförmig ausgebildeten Arm 7 und dem Ansatz 49. Am Adapterstück 46 befinden sich zwei parallele Arretierungslappen 51 mit je einem Arretierungsloch 52. In das obere Ende des Grundkörpers 48 ist ein Saatgut-Zuführungsrohr 53 eingesteckt, das als biegbarer Schlauch ausgebildet ist.

Der Säscharkörper 47 (in Fig. 12 ist ein Normal-Säscharkörper dargestellt) hat eine vordere Schneide 54 zum Ziehen einer Furche, eine Austrittsöffnung 55 für Saatgut und einen inneren Kanal 56. Der Kanal 56 hat einen oberen zylindrischen Abschnitt, an dessen unterem Ende sich eine Schulter 56'a befindet. Ferner befindet sich am Säscharkörper 47 ein Arretierungslappen 57, der von einem Arretierungsloch 58 durchbrochen ist.

Zur Befestigung des Säscharkörpers 47 wird dieser von unten her auf den rohrförmigen Grundkörper 48 aufgeschoben, wobei der Grundkörper passend in den Kanalabschnitt 56a eingreift.

In Fig. 13 ist die montierte Stellung des Säscharkörpers 47 dargestellt, wobei der Säscharkörper 47 mit gestrichelten Linien dargestellt ist. Nach vollständigem Aufschieben des Säscharkörpers greift der Arretierungslappen 47 zwischen die beiden Arretierungslappen 51 am Adapterstück 46 ein, wonach die Löcher 52 und 58 miteinander fluchten. Durch diese Löcher wird ein Arretierungsbolzen 59 hindurchgesteckt, der noch durch einen Querstift axial gesichert werden kann. Als Variante zur Fig. 12 ist in Fig. 13 ein teleskopartiges Saatgut-Zuführungsrohr 53' eingezeichnet, das aus einzelnen, relativ zueinander beweglichen Elementen besteht, so daß das Rohr insgesamt ähnlich flexibel ist wie ein Schlauch.

Auch auf ein Adapterstück 46 können wahlweise Normal-Säscharkörper und Bandsaat-Säscharkörper aufgesteckt werden, wobei die Bandsaat-Säscharkörper an ihren Anschlußenden gleich ausgebildet sind wie der Normal-Säscharkörper nach den Fig. 12 und 13.

In Fig. 14 ist eine Variante dargestellt, die im Prinzip gleich ausgebildet ist wie die Ausführungsform nach den Fig. 12 und 13. Unterschiedlich ist,daß der Säscharkörper 60 (wieder ein Normal-Säscharkörper) an seinem Ansatz 49' eine Aufnahmebohrung 61 aufweist, in die das untere Ende des schwenkbaren Armes 7 eingreifen und daß das Saatgut-Zuführungsrohr 64 direkt in den Säscharkörper 60 gesteckt werden kann. Nach vollständigem Eingriff des Arms 7 ist ein Arretierungsloch 62 im schwenkbaren Arm 7 mit Arretierungslöchern 63 im Ansatz 49' zur Deckung gebracht, wonach eine Sicherung durch einen Arretierungsbolzen erfolgt. Das Saatgut-Zuführungsrohr 64 wird auch gemäß Fig. 14 in eine zylindrische Kanalerweiterung 56'a eingesteckt und ein Adapterstück ist also gespart.

In den Fig. 15 bis 17 ist eine Ausführungsform dargestellt, bei der ein schwenkbarer Arm 7' zugleich als Saatgut-Zuführungsrohr ausgebildet ist. Das Rohr 7' ist mittels eines Gelenkes 65 am Gestell 1 der Samäschine angelenkt. Das Rohr 7' ist über flexible Glieder an den Saatgutkasten 66 angeschlossen.

Am unteren Ende des Rohres 7' ist ein Säscharkörper 67 befestigt. Es handelt sich um einen Normal-Säscharkörper mit einer Schneide 68 für das Einformen einer Särille in den Boden. Der Säscharkörper 67 enthält einen Kanal 69 mit einer hinteren Austrittsöffnung 70 für Saatgut. In das obere Ende paßt der untere, gekrümmte Endbereich des Rohres 7'.

Am Rohr 7' ist ein Arretierungslappen 71 mit Arretierungsloch 72 befestigt. Am Säscharkörper 67 befinden sich zwei Befestigungslappen 73, 74, die einen Zwischenraum 75 einschließen, in den der Arretierungslappen 71 eingreifen kann. Wenn der Säscharkörper 67 voll aufgeschoben ist, fluchtet das Arretierungsloch 72 mit Arretierungslöchern 76 in den Lappen 73, 74. Zur Sicherung wird ein Arretierungsbolzen durch alle Arretierungslöcher 72 und 76 hindurchgeschoben und mittels eines Querstiftes axial gesichert.

Auch bei einer Sämaschine mit einer Säscharkörperbefestigung nach den Fig. 15 bis 17 sind Sätze verschiedener Säscharkörper vorgesehen, also außer dem gezeigten NormalSäscharkörper auch mindestens eine Sorte von Bandsaat-Säscharkörpern.

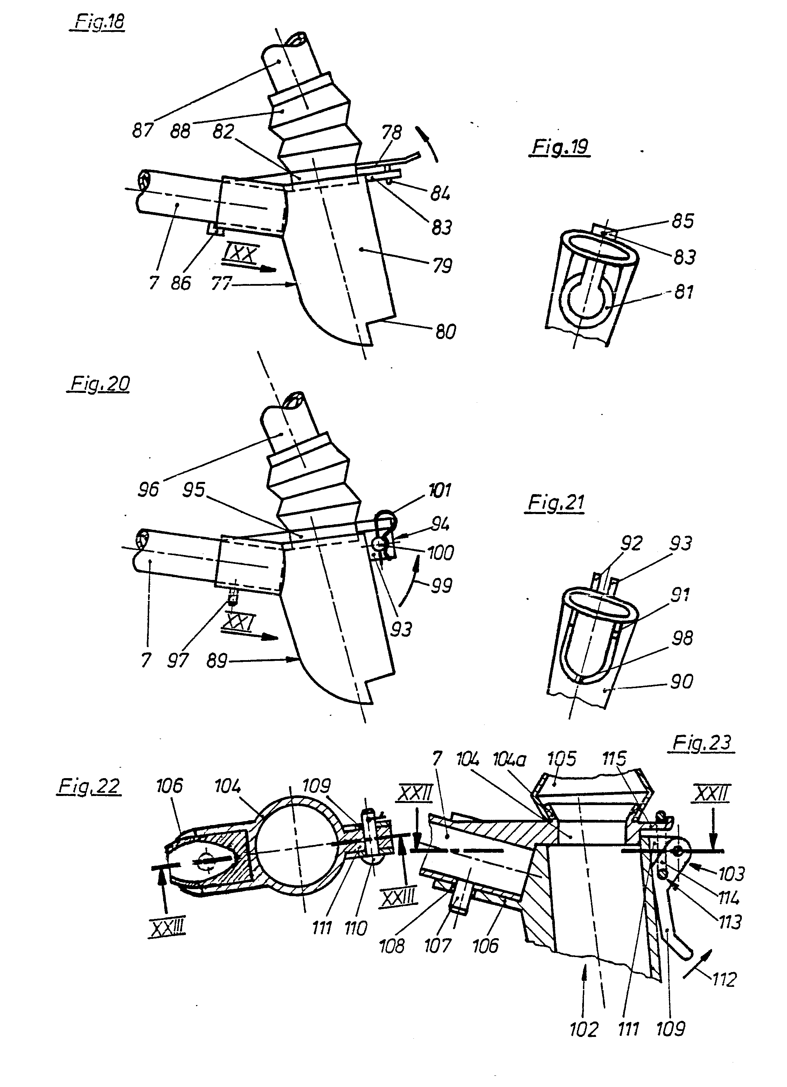

Bei der Ausführungsform nach den Fig. 18 und 19 ist an einem schwenkbaren Arm 7 ein Säscharkörper 77 befestigt, wobei zur Arretierung eine Blattfeder 78 dient. Der Säscharkörper 77 hat einen etwa trichterförmigen Grundkörper 79 mit unterer Auslaßöffnung 80. Am Grundkörper 79 befindet sich ein rohrförmiger Ansatz 81, der in Längsrichtung des schwenkbaren Armes 7 auf diesen aufschiebbar ist.

Am Arm 7 befindet sich ein Flansch 82, von dem die Blattfeder 78 abragt. Die Blattfeder 78 hat einen nach unten ragenden Arretierungsstift 84. Vom Grundkörper 79 des Säscharkörpers 77 ragt ein Ansatz 83 ab, in dem sich ein Loch 85 für den Eingriff des Stiftes 84 befindet.

Aufgrund der Ausweichbarkeit der Blattfeder 78 ist es möglich, den rohrförmigen Ansatz 81 in Längsrichtung des schwenkbaren Armes 7 auf diesen aufzuschieben. Nach vollständigem Aufschieben untergreift ein Haken 86 den rohrförmigen Ansatz 81 und der Stift 84 ist in das Loch 85 eingerastet.

Auch bei dieser Ausführungsform lassen sich Säscharkörper einer Art rasch gegen Säscharkörper einer anderen Art auswechseln, nämlich sozusagen mit einem einzigen Griff. Es ist nur das Anheben der Feder 78 erforderlich, wonach sich der Säscharkörper vom Arm 7 abziehen läßt. Ein Saatgut-Zuführungsrohr 87 ist in gleicher Weise an den Flansch 82 mittels eines Faltenbalgens 88 angeschlossen, wie dies schon anhand anderer Ausführungsformen beschrieben wurde.

Bei der Ausführungsform nach den Fig. 20 und 21 ist wieder ein Säscharkörper 89 vorgesehen, an dessen trichterförmigem Grundkörper 90 ein muldenförmiger Ansatz 91 vorgesehen ist. Ferner befinden sich am Grundkörper 90 zwei Arretierungslappen 92, 93 mit Durchgangslöchern. Zwischen die Lappen 92, 93 kann ein Arretierungslappen 94 eingreifen, der sich an einem Flansch 95 für den Anschluß eines Saatgut-Zuführungsrohres 96 befindet.

Von dem schwenkbaren Arm 7 ragt nach unten ein Stift 97 ab, der ein Loch 98 in der Mulde 91 durchgreifen kann.

Bei der Befestigung des Säscharkörpers 89 wird dieser von unten an den schwenkbaren Arm 7 herangeschoben, wobei der Stift 97 in das Loch 98 eingefädelt wird. Danach wird eine Schwenkbewegung entsprechend dem Pfeil 99 ausgeführt, bis die Arretierungslöcher in den Lappen 92, 93 mit einem Arretierungsloch im Lappen 94 zur Deckung gekommen sind. Danach wird ein Arretierungsbolzen 100 durch die miteinander fluchtenden Arretierungslöcher gesteckt. Dieser Arretierungsbolzen wird mittels eines als Federklammer ausgebildeten Querstiftes 101 gesichert, der durch ein Querloch im Arretierungsbolzen 100 hindurchgesteckt wird.

Bei der Ausführungsform nach den Fig. 22 und 23 ist ein Säscharkörper 102 mittels eines Spannverschlusses 103 an einem schwenkbaren Arm 7 befestigt. Am schwenkbaren Arm 7 befindet sich wieder ein Flansch 104, der oben eine trichterförmige Erweiterung 104a zum Überstülpen eines Faltenbalgens 105 aufweist, der zum flexiblen Anschließen eines nicht dargestellten Saatgut-Zuführungsrohres dient.

Der Säscharkörper 102 hat einen muldenförmigen Ansatz 106, der in der Befestigungsstellung den schwenkbaren Arm 7 von unten her umgreift. Hierbei durchgreift ein am Arm 7 befestigter Stift 107 in ein Loch 108 des Ansatzes 106 ein.

Zur weiteren Fixierung dient der bereits genannte Spannverschluß. Der Spannverschluß hat einen Spannhebel 109, der um ein Gelenk 110 schwenkbar ist, da sich an einem fest mit dem Säscharkörper 102 verbundenen Ansatz 111 befindet. Der Spannhebel 109 ist in einer vertikalen Ebene entsprechend dem Pfeil 112 bewegbar. Am Spannhebel 109 greift bei 113 gelenkig ein Spannglied 114 an, das in der Befestigungsstellung des Säscharkörpers 102 über einen Haken 115 gehängt ist, der sich an dem Flansch 104 befindet.

Die Funktion des Spannverschlusses ist aus der Zeichnung ohne weiteres ersichtlich. In der gezeichneten Spannstellung befindet sich die Wirkungslinie des Zuggliedes 114 links vom Schwenkpunkt 110 des Spannhebels 109, wodurch eine stabile Verriegelungslage gegeben ist. Zum Lösen des Säscharkörpers 102 wird der Spannhebel in Richtung des Pfeiles 113 bewegt, wobei das Spannglied 114 mit seiner Wirkungslinie auf die rechte Seite des Gelenkes 110 gelangt, wonach das Spannglied leicht aus dem Haken 115 ausgehangt werden kann. Durch Absenken des Säscharkörpers 102 nach unten kann dieser bequem vom Flansch 104 gelöst werden. Das Ansetzen eines anderen Säscharkörpers ist ebenfalls rasch mit wenigen Handgriffen möglich.

## Ansprüche

1. Bausatz für eine Sämaschine und austauschbaren Säscharkörpern für Reihensaat (Normalsaat) und Bandsaat, vorzugsweise auch Säscharkörpern mit Rollscharen, die an in einer vertikalen Ebene schwenkbaren Armen gehalten sind, dadurch gekennzeichnet, daß die Säscharkörper (9; 29; 39; 47; 60; 67; 77; 89; 102) mit einer leicht lösbaren Verbindung (23, 24, 26; 52, 58, 59; 62, 63; 72, 76; 81, 78, 84; 91, 97, 92, 93, 100; 106, 107, 103), vorzugsweise mittels einer ohne Werkzeuge herstellbaren und lösbaren Steckverbindung, an den schwenkbaren Armen (7; 7') gehalten sind und daß mit der Verbindung (23, 24, 26; 52, 58, 59; 62, 63; 72, 76; 81, 86, 86, 78, 84; 91, 97, 92, 93, 100; 106, 107, 103) die Säscharkörper (9; 29; 39; 47; 60, 67; 77; 89; 102) auch gegenüber einem Saatgut-Zuführungs rohr (10; 53; 7'; 87; 96) ausgerichtet sind.

2. Bausatz nach Anspruch 1, dadurch gekennzeichnet, daß an jedem schwenkbaren Arm (7) ein Anschlußflansch (15; 82; 95; 104) oder dergleichen für ein Saatgut-Zuführungsrohr (10; 53; 87; 96) starr befestigt ist und die Säscharkörper (9; 77; 89; 102) eine an den Flansch (15; 82; 95; 104) ansetzbare obere Öffnung aufweisen.

3. Bausatz nach einem der vorhergehenden Ansprüche, dadurch gekennzeichnet, daß die Säscharkörper einen Ansatz (23; 23'; 23"; 49; 81; 91; 106) aufweisen, der auf den schwenkbaren Arm (7) aufsetzbar und mit diesem verriegelbar ist.

4. Bausatz nach Anspruch 3, dadurch gekennzeichnet, daß der Ansatz (23; 23; 23"; 91; 106) muldenförmig ausgebildet ist und in der Befestigungsstellung den schwenkbaren Arm (7) von unten umfaßt und mittels eines Querstiftes (26; 97; 107) verriegelt ist, der die Muldenwand und den - schwenkbaren Arm (7) durchgreift.

5. Bausatz nach Anspruch 4, dadurch gekennzeichnet, daß der Querstift (26) axial gesichert ist, z.B. mit einem Splint (27) mit Federarretierung.

6. Bausatz nach Anspruch 5, dadurch gekennzeichnet, daß jeder Säscharkörper (77; 89; 102) zusätzlich im Bereich des Anschlußflansches (82; 95; 104) an diesem fixiert ist.

7. Bausatz nach Anspruch 6, dadurch gekennzeichnet, daß am Anschlußflansch (82) eine Blattfeder (78) befestigt ist, an der sich ein Stift (84) befindet, der in der Befestigungs stellung des Säscharkörpers (77) in ein Arretierungsloch (85) am Säscharkörper (77) eingreift, wobei der Ansatz (81) vorzugsweise rohrförmig ausgebildet ist (Fig. 18, 19).

8. Bausatz nach Anspruch 7, dadurch gekennzeichnet, daß der Ansatz (81) an seinem Ende von einem am schwenkbaren Arm (7) befestigten Haken (86) umgriffen ist.

9. Bausatz nach Anspruch 6, dadurch gekennzeichnet, daß am Flansch (95) und am Säscharkörper (89) Arretierungslappen (94, 92/93) mit Arretierungsloch vorgesehen sind und in der Befestigungsstellung die Arretierungslöcher von einem Arretierungsstift (100) durchgriffen sind, der vorzugsweise axial gesichert ist, z.B. mittels eines als Feder ausgebildeten Querstiftes (101) (Fig. 20, 21).

10. Bausatz nach Anspruch 9, dadurch gekennzeichnet, daß an jedem schwenkbaren Arm ein Stift (97) befestigt ist, der in der Befestigungsstellung ein Loch im Ansatz (91) des zugeordneten Säscharkörpers (89) durchgreift.

11. Bausatz nach Anspruch 6, dadurch gekennzeichnet, daß an jedem Säscharkörper (102) ein Spannverschluß (103) angeordnet ist, der in der Befestigungsstellung des Säscharkörpers (102) am Flansch (104) angreift.

12. Bausatz nach Anspruch 11, dadurch gekennzeichnet, daß der Spannverschluß (103) einen rechtwinklig zum Flansch (104) angeordneten Spannhebel (109) aufweist, mit dem ein Zugglied (114) gelenkig verbunden ist, das am Flansch (104) angreift, vorzugsweise diametral gegenüber des Ansatzes (106).

13. Bausatz nach Anspruch 1, gekennzeichnet durch ein Adapterstück (46) an jedem - schwenkbaren Arm (7), an das das Saatgut-Zuführungsrohr (53, 53') angeschlossen ist und das einen nach unten ragenden rohrförmigen Ansatz (48) aufweist, auf den die Säscharkörper (47) aufsteckbar sind, wonach der nach unten ragende Ansatz (48) in eine obere Aufnahmebohrung (56a) des jeweiligen Säscharkörpers (47) eingreift (Fig. 12, 13).

14. Bausatz nach Anspruch 13, dadurch gekennzeichnet, daß am Adapterstück (46) und am Säscharkörper (47) Arretierungslappen (52, 57) mit Arretierungslöchern (52, 58) angeordnet sind, die in der Befestigungsstellung des Säscharkörpers (47) miteinander fluchten und von einem vorzugsweise axial gesicherten Verriegelungsbolzen (59) durchgriffen sind.

15. Bausatz nach Anspruch 1, gekennzeichnet durch Säscharkörper (60), die eine Einsecköffnung (56'a) für das zugeordnete Saatgut-Zuführungsrohr (64) und einen Befestigungsansatz (49') zur Befestigung an dem zugeordneten schwenkbaren Arm (7) aufweist (Fig. 14).

16. Bausatz noch Anspruch 15, dadurch gekennzeichnet, daß der Befestigungsansatz (49') eine Bohrung (61) aufweist, in die der schwenkbare Arm (7) eingreift, wobei vorzugsweise ein Arretierungsbolzen vorgesehen ist, der miteinander fluchtende Arretierungsbohrungen (62, 63) im Ansatz (49') und im Schwenkarm (7) durchgreift.

17. Bausatz nach Anspruch 1, dadurch gekennzeichnet, daß jeder schwenkbare Arm (7') zugleich als Saatgut-Zu führungsrohr ausgebildet ist und daß jeder Säscharkörper (67) auf das untere Ende des zugeordneten schwenkbaren Armes (7') aufgesteckt ist, wobei das Saatgut-Zuführungsrohr in einen Kanal (69) des Säscharkörpers (67) eingreift.

18. Bausatz nach Anspruch 17, dadurch gekennzeichnet, daß an jedem schwenkbaren Arm (7') und an jedem Säscharkörper (67) Arretierungsbohrungen (72, 76) vorgesehen sind, die in der Befestigungsstellung des Säscharkörpers (67) miteinander fluchten und von einem vorzugsweise axial gesicherten Arretierungsbolzen durchgriffen sind.

19. Bausatz nach Anspruch 18, dadurch gekennzeichnet, daß an jedem schwenkbaren Arm (7') ein Arretierungslappen (71) befestigt ist, der in eine Vertiefung (75) eines befestigten Säscharkörpers (67) eingreift und deren Seitenwände (73, 74) ebenfalls Arretierungslappen bilden.

*Fig. 1*

0 286 730

Fig.2

Fig.4

Fig.3

Fig.8

Fig.7

Fig.6

Fig.5

Fig.9

Fig.10

Fig.11

0 286 730

Fig.12

Fig.13

Fig.14

0 286 730

*Fig.16*

*Fig.15*

*Fig.17*

0 286 730

Fig.18

Fig.19

Fig.20

Fig.21

Fig.22

Fig.23

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-A- 434 865 (THOMAS) <br> * Seiten 3-5; Figuren 1-4 * <br> --- | 1,3,17-19 | A 01 C 5/06 |
| X | FR-A- 622 290 (LIOT) <br> * Seite 1, Zeilen 44-64; Seite 2, Zeilen 1-83; Figuren 1-7 * <br> --- | 1,6,13-16 | |
| A | US-A-1 868 974 (GERALDSON) <br> * Seite 1, Zeilen 33-100; Figuren 1-6 * <br> --- | 1 | |
| A | US-A-3 217 674 (WILLIAMS) <br> * spalte 3, Zeilen 38-75; Spalten 4,5; Figuren 1-8 * <br> --- | 1 | |
| A | EP-A-0 183 203 (AMAZONEN-WERKE) <br> * Seite 5, Zeilen 26-38; Seiten 6-8; Figuren 1-9 * <br> ----- | 1,5 | |
| | | | **RECHERCHIERTE SACHGEBIETE (Int. Cl.4)** |
| | | | A 01 C |

Der vorliegende Recherchenbericht wurde für alle Patentansprüche erstellt

| Recherchenort | Abschlußdatum der Recherche | Prüfer |
|---|---|---|
| DEN HAAG | 20-04-1988 | VERMANDER R.H. |